# EUROPÄISCHE PATENTSCHRIFT

(11) **EP 0 416 294 B1**
(45) Veröffentlichungstag und Bekanntmachung des Hinweises auf die Patenterteilung: **03.11.1993**
(21) Anmeldenummer: 90115001.1
(22) Anmeldetag: 04.08.1990
(51) Int. Cl.: F16K 11/065

(54) **Ventilkörperpaarung**
Pairing of valve bodies
Appariement de corps de soupape

(30) Priorität: 02.09.1989 DE 3929147
(43) Veröffentlichungstag der Anmeldung: 13.03.1991
(73) Patentinhaber: FRIEDRICH GROHE AKTIENGESELLSCHAFT, D-58675 Hemer (DE)
(72) Erfinder: Bechte, Veit, D-4755 Holzwickede (DE)

(56) Entgegenhaltungen:
- DE-A- 2 711 500
- DE-A- 3 137 774
- FR-A- 2 590 643

## Beschreibung

Die Erfindung betrifft eine Ventilkörperpaarung zur Regulierung und/oder Absperrung eines oder mehrerer Fluidströme, insbesondere für Wasserarmaturen, wobei wenigstens ein Ventilkörper zumindest an seiner Dichtfläche aus hartem keramischem Material besteht.

Derartige Ventilkörper sind bekannt (DE-A-12 91 957). Hierbei sind zwei Ventilscheiben aus Hartkeramik in einem Gehäuse gelagert, wobei eine erste Ventilscheibe mit einem Stellglied, z.B. eine Ventilspindel, bewegbar an einer zweiten, ortsfest im Gehäuse gehalterten Ventilscheibe angelagert ist. Die Scheiben weisen Durchtritts- oder Überströmöffnungen auf, so daß in Abhängigkeit von der jeweiligen Relativstellung der beiden Scheiben zueinander ein Durchtritt oder Absperrung oder auch Mischung von verschiedenen Fluiden, insbesondere Wasser, ermöglicht ist. Die Dichtflächen der beiden Keramikscheiben sind dabei feinstbearbeitet, so daß sie wasserdicht im Gehäuse zueinander verschiebbar sind. Die Dichtheit der Scheiben bei Wasserbeaufschlagung wird ausschließlich über die sehr geringen Rauhigkeitswerte und die sehr hohe Planizität der Scheiben gewährleistet.

Da die Reibpaarung Keramik/Keramik einen relativ hohen Reibungskoeffizienten aufweist, sind die Betätigungskräfte, die für die Stellung der Ventilscheiben zueinander benötigt werden, relativ hoch. Um diesen Nachteil zu beheben, ist man daher dazu übergegangen, die Scheiben an den Dichtflächen mit Schmierfett zu versehen. Hierdurch kann zunächst eine Leichtgängigkeit der Ventilscheiben erreicht werden. Allerdings muß in Kauf genommen werden, daß während des Gebrauchszeitraums mit der Zeit das Fett von dem durchströmenden Wasser von den Dichtflächen abgewaschen wird, so daß mit zunehmender Benutzungsdauer auch eine zunehmende Schwergängigkeit festzustellen ist. Dieses kann sogar dazu führen, daß die Betätigungskräfte unzulässig hohe Werte erreichen, so daß das Ventil nicht mehr betriebsbereit ist.

Der Erfindung liegt daher die Aufgabe zugrunde, eine Ventilkörperpaarung vorzuschlagen, die ein reibungsarmes, dauerhaftes Gleitsystem ermöglicht.

Diese Aufgabe wird erfindungsgemäß dadurch gelöst, daß der/die an dieser Dichtfläche aus keramischem Material anliegende/n Ventilkörper zumindest an seiner/ihren Dichtfläche/n, die an der Dichtfläche aus keramischem Material anliegt/anliegen, aus Kunststoffmaterial besteht/bestehen.

Aus dem deutschen Gebrauchsmuster DE-U-86 06 471 ist es bereits bei Dichtscheiben für Sanitärarmaturen bekannt, anstatt der Vollkeramikscheiben mit Keramik beschichtete Scheibenkörper aus Glas vorzusehen, wobei ihrerseits auf der Keramikschicht jeweils noch eine Gleitschicht aufgebracht sein soll. Beide aneinanderliegende Dichtscheiben weisen somit die gleiche Materialbeschichtung auf, so daß dieses Gleitsystem hinsichtlich Reibungskoeffizienten und Verschließrate problembeladen sein dürfte.

Mit der erfindungsgemäßen Ausbildung wird dagegen in überraschender Weise ein reibungsarmes Dicht- und Gleitsystem insbesondere für Misch- und/oder Absperrvorrichtung geschaffen, dadurch, daß der eine Partner an der Dichtfläche aus Keramikmaterial und der andere Partner aus Kunststoffmaterial hergestellt ist. Aufgrund des niedrigen Reibungskoeffizienten der Reibpaarung Keramik/Kunststoff kann auf eine Befettung der Scheiben verzichtet werden. Außerdem kann bei der erfindungsgemäßen Paarung der Ventilkörper auf die sehr hohe Planizitätsanforderung, wie sie bei den herkömmlichen Keramikventilscheiben erforderlich sind, verzichtet werden. Bei der erfindungsgemäßen Ventilkörperpaarung wird die Dichtheit nicht durch strenge Maßtoleranzen, sondern durch das Verformungsvermögen des Kunststoffes, z.B. Ausgleich von Geometrieabweichungen in der Planizität, erreicht. Dieses Verformungsvermögen des Kunststoffes ermöglicht es, die an sich für Keramikscheiben sehr geringen Maßtoleranzen erheblich zu vergrößern, wodurch auch die Herstellung des Ventilkörpers aus Keramikmaterial wesentlich kostengünstiger erfolgen kann, da die aufwendige Feinstbearbeitung nicht erforderlich ist. Zur Abdichtung sind Oberflächengüten der Kunststoffdichtfläche ausreichend, wie sie durch Spritzgießen oder Feindrehen erreicht werden.

In weiterer Ausgestaltung der Erfindung kann besonders vorteilhaft das Kunststoffmaterial Polyäthylen oder Polypropylen für den einen Ventilkörper verwendet werden. In einem Langzeitversuch mit einer Ventilkörperpaarung von einem Ventilkörper aus Polyäthylen und einem Ventilkörper von einer herkömmlichen Keramikventildichtscheibe wurde nach über zweihunderttausend Schaltungen so gut wie kein Anstieg des Drehmoments festgestellt. Auch wurde erstaunlicherweise kaum ein Verschleiß nach über zweihunderttausend Schaltungen an der weichen Polyäthylenscheibe festgestellt.

Weitere Ausgestaltungen der Erfindung sind in den Ansprüchen 3 bis 17 angegeben.

Die erfindungsgemäße Ausbildung kann sowohl bei Ventilkörpern in Scheiben-, Kugel-, Zylinderform für Mengenregulierventile, Mischventile und Mehrwegeventile etc. eingesetzt werden. Auch können mit einem, eine Dichtfläche aus hartem Keramikmaterial aufweisenden Ventilkörper mehrere Ventilkörper mit jeweils einer Dichtfläche aus Kunststoffmaterial zusammenwirken.

Wird mit einem erfindungsgemäßen Ventil ein Medium gesteuert, in dem Partikel mitgeführt werden, so kann zweckmäßigerweise an dem der Keramikdichtfläche gegenüberliegenden Ventilkörper ein Metallclip etc. zugeordnet werden, so daß beim Schließvorgang die Partikel von der Dichtfläche abgestreift werden können.

Ausführungsbeispiele der Erfindung sind in der Zeichnung dargestellt und werden im folgenden näher erläutert. Es zeigt
- Figur 1: ein in Sanitärarmaturen einsetzbares Mengenregulierventil im Längsschnitt;
- Figur 2: eine Ventilsitzscheibe des in Figur 1 gezeigten Mengenregulierventils in Druntersicht;
- Figur 3: ein Seitenschnitt der Ventilsitzscheibe gemäß Figur 2;
- Figur 4: eine andere Ventilregulierscheibe im Seitenschnitt, die alternativ in das Mengenregulierventil gemäß Figur 1 einsetzbar ist;
- Figur 5: eine Draufsicht der Ventilregulierscheibe gemäß Figur 4;
- Figur 6: ein Misch- und Mengenregulierventil im Längsschnitt;
- Figur 7: eine Regelscheibe des Misch- und Mengenregulierventils gemäß Figur 6 im Seitenschnitt;
- Figur 8: die Ventilregulierscheibe gemäß Figur 7 in Draufsicht;
- Figur 9: eine andere Ventilregulierscheibe, die alternativ in das Misch- und Mengenregulierventil gemäß Figur 6 einsetzbar ist;
- Figur 10: eine Draufsicht der Regelscheibe gemäß Figur 9.

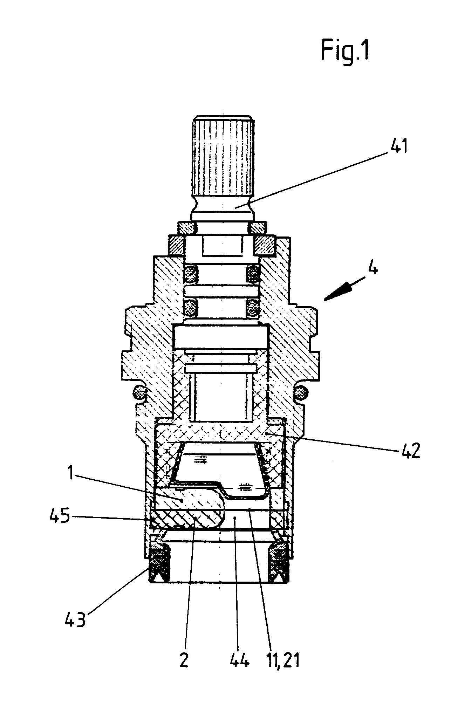

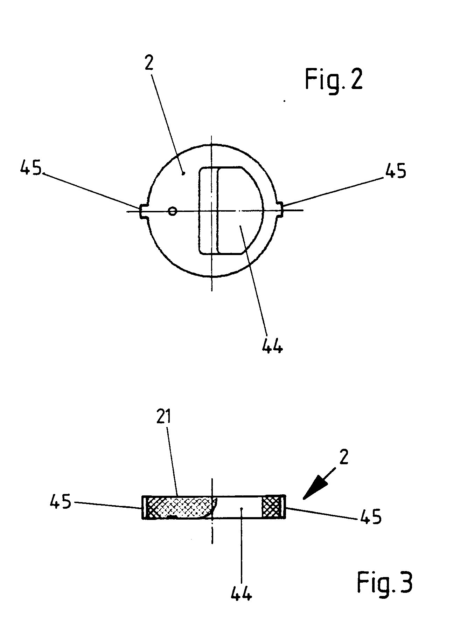

Der Einfachheit halber sind bei den Ausführungsbeispielen in der Zeichnung gleiche oder entsprechende Elemente mit jeweils gleichen Bezugszeichen versehen.
Das in Figur 1 gezeigte Mengenregulierventil ist für den Einsatz in Sanitärarmaturen vorgesehen, wobei es als sogenannte Baueinheit oder "Ventiloberteil" einsetzbar ist. Der Baueinsatz besteht aus einem Ventilgehäuse 4, in dem ein Ventilkörper 2 aus Kunststoffmaterial, z.B. Polyäthylen, als Ventilsitzscheibe und ein Ventilkörper 1 aus keramischem Material als Regelscheibe angeordnet sind. Der Ventilkörper 1 wird dabei von einem Mitnehmer 42 drehbar gehaltert und axial gestützt, wobei an dem Mitnehmer 42 eine Ventilspindel 41 eingespritzt ausgebildet ist, die gedichtet aus dem Ventilgehäuse 4 herausgeführt ist und einen Zapfen für die Aufnahme eines in der Zeichnung nicht dargestellten Griffstücks aufweist. Das Ventilgehäuse 4 ist an der der Ventilspindel 41 gegenüberliegenden Stirnseite offen ausgebildet für den Zustrom von Wasser aus dem Zuströmkanal in der Sanitärarmatur. Zur Abdichtung des Übergangs zwischen dem Ventilkörper 2 und dem Zuströmkanal in der Sanitärarmatur (in der Zeichnung nicht dargestellt) ist im Bereich der offenen Stirnseite des Ventilgehäuses 4 ein ringförmiges Dichtelement 43 angeordnet. In den beiden Ventilkörpern 1 und 2 ist jeweils eine Durchtrittsöffnung 44 ausgebildet. Der Ventilkörper 2 ist außerdem in dem Ventilgehäuse 4 in Axialnuten mit Nasen 45, wie es insbesondere aus Figur 2 zu entnehmen ist, drehgesichert aber axial verschieblich gehaltert.
Wenn das Mengenregulierventil 4 in einer Sanitärarmatur eingesetzt ist, wird von dem Dichtelement 43 eine Mindestanpressung der beiden Ventilkörper 1 und 2 erzielt, der jeweils durch den anstehenden Flüssigkeitsdruck verstärkt wird. Die beiden Ventilkörper 1 und 2 werden so mit ihren Dichtflächen 11 und 21 aneinandergedrückt. In Figur 1 ist das Mengenregulierventil in voll geöffneter Stellung gezeigt. Wird nun mit Hilfe der Ventilspindel 41 der Ventilkörper 1 verdreht, somit gelangen die beiden Durchtrittsöffnungen 44 zunehmend aus ihrer Durchgangsposition in die Schließposition bis nach einer Drehung von 180° der Ventilkörper 1 die Durchtrittsöffnung 44 im Ventilkörper 2 völlig absperrt.

Hierbei gleitet die Dichtfläche 11 des Ventilkörpers 1 auf der Dichtfläche 21 des Ventilkörpers 2. Die Dichtfläche 21 weist dabei eine Oberflächengüte auf, wie sie beim Spritzgießen oder beim Feindrehen erreicht werden. Die äußerst aufwendige Feinstbearbeitung (läppen und polieren), wie sie bei zwei aneinanderliegenden Keramikscheiben erforderlich ist, kann hierbei entfallen, da durch das Verformungsvermögen des Kunststoffes im gewissen Bereich Ungenauigkeiten kompensiert werden.

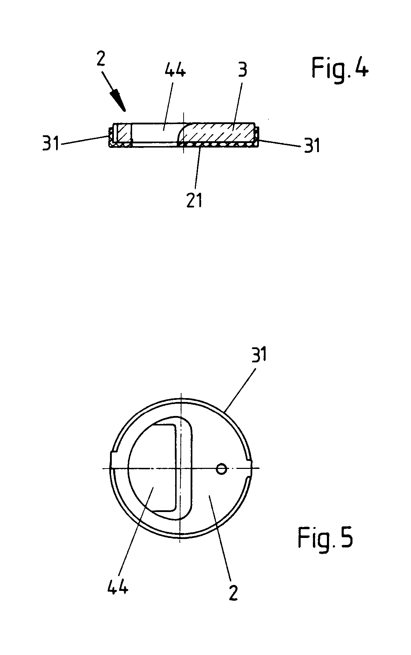

In den Figuren 4 und 5 ist alternativ ein Ventilkörper 2 gezeigt, wie er in ein Mengenregulierventil gemäß Figur 1 einsetzbar ist. Der Ventilkörper 2 ist dabei von einem Trägerkörper 3 und einer Kunststoffkappe 31, z.B. aus Polyäthylen, gebildet. Der Trägerkörper 3 kann aus Metallpulver, Keramikmaterial gesintert oder aus einem sonstigen Material hergestellt sein. Die Kunststoffkappe 31 kann adhäsiv auf dem Trägerkörper 3 verankert sein. Darüber hinaus kann die Kunststoffkappe 31 auch form- und/oder kraftschlüssig mit dem Trägerkörper 3 verbunden sein. In jedem Fall sollte die Kunststoffkappe 31, die den Trägerkörper 3 nur zum Teil bedeckt, so angeordnet sein, daß der Fluidstrom durch das Ventil die Kunststoffkappe 31 gegen den Trägerkörper 3 drückt.

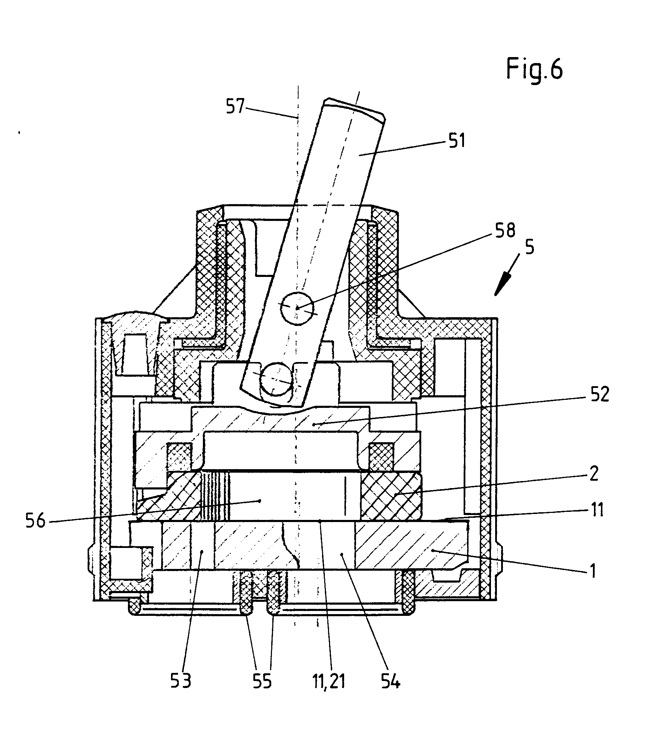

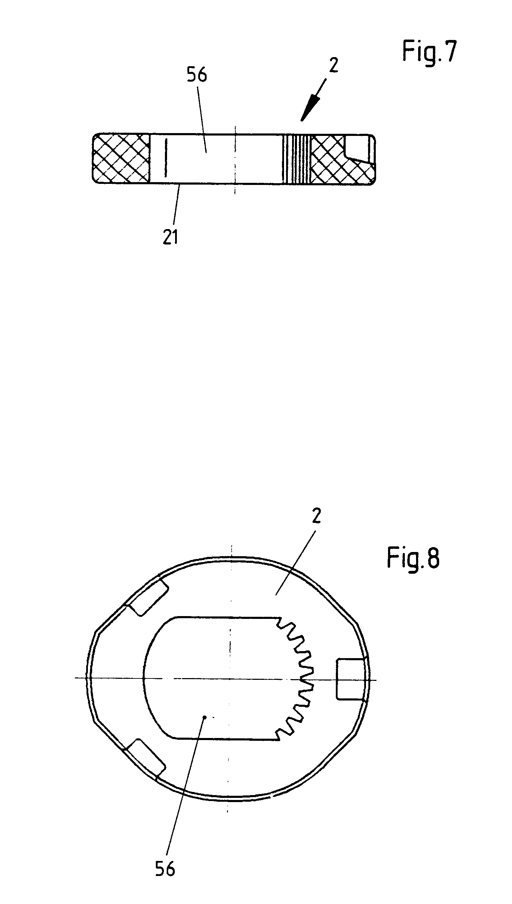

Das in den Figuren 6 bis 10 gezeigte Misch- und Mengenregulierventil ist ebenfalls als Baueinheit oder Ventilkartusche für den Einsatz in Sanitärarmaturen vorgesehen. Ein derartiges Mischventil ist z.B. aus der DE-A-35 10 835 bereits bekannt, so daß im nachfolgenden lediglich in groben Zügen dieses Mischventil erläutert wird.
Das Mischventil besteht aus einem Gehäuse 5, welches die Ventileinzelteile im wesentlichen kapselt und als Baueinheit oder Ventilkartusche in Sanitärarmaturen eingesetzt wird. In dem Gehäuse 5 ist ein Ventilkörper aus keramischem Material neben einem Ventilkörper 2 1 aus Kunststoffmaterial, z.B. Polyäthylen, angeordnet. Der Ventilkörper 1 liegt mit seiner Dichtfläche 11 an der Dichtfläche 21 des Ventilkörpers 2 an. Die beiden Ventilkörper 1 und 2 sind dabei scheibenförmig ausgebildet, wobei der Ventilkörper 1 auf einem Kreisring je eine als Kreisringsegment ausgebildete Kalt- und Warmwasserzulauföffnung 53 (in der Zeichnung nur eine Durchtrittsöffnung gezeigt) und eine Mischwasserauslaßöffnung 54 aufweist. Der Ventilkörper 1 ist axial verschieblich aber drehfest in dem Gehäuse 5 gehaltert, wobei an der äußeren Stirnseite Anschlußdichtungen 55 für die Zu- und Rückführung des Wassers zu der in der Zeichnung nicht dargestellten Armatur vorgesehen sind. An der gegenüberliegenden Stirnseite des Ventilkörpers 1 ist der Ventilkörper 2 aus Kunststoffmaterial mit seiner Dichtfläche 21 angelagert. Der Ventilkörper 2 ist ebenfalls scheibenförmig ausgebildet und weist einen als Durchbruch ausgebildeten Überströmkanal 56 auf. Der Überströmkanal 56 ist dabei an der einen Seite von einer Abdeck- und Führungshaube 52 verschlossen. An der Abdeck- und Führungshaube 52 ist ein Stellhebel 51 angelenkt. Durch ein Verdrehen des Stellhebels 51 um die Mittelachse 57 kann der Ventilkörper 2 zum Ventilkörper 1 verdreht werden, so daß hierdurch die Einlaßquerschnitte der Kalt- und Warmwasserzulauföffnungen 53 gegensinnig verändert werden, so daß das Mischungsverhältnis bzw. die Temperatur des austretenden Mischwassers entsprechend geändert werden. Durch ein Verschwenken des Stellhebels 51 um die waagerechte Achse 58 wird dagegen der Ventilkörper 2 radial zur lotrechten Mittelachse 57 verschoben, so daß hierdurch die Eintrittsquerschnitte der Kalt- und Warmwasserzulauföffnungen 53 gleichsinnig verringert oder vergrößert werden, so daß durch diese Stellbewegung die Gesamtdurchflußmenge einstellbar ist.
Wie insbesondere aus Figur 7 ersichtlich, ist der Ventilkörper 2 massiv aus Kunststoff, wie Polyäthylen oder Polypropylen hergestellt.

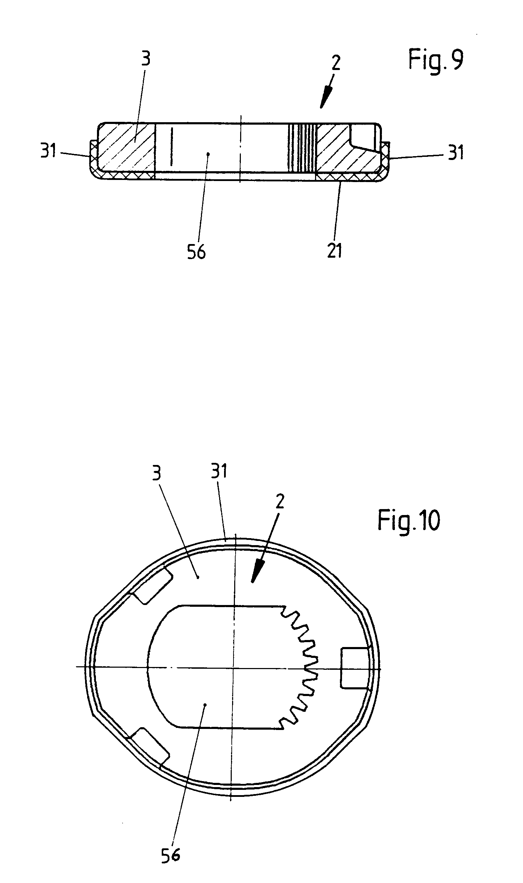

In den Figuren 9 und 10 ist alternativ zu dem Ventilkörper 2 gemäß Figur 7 und 8 ein Ventilkörper 2 gezeigt, der aus einem Trägerkörper 3 und einer Kunststoffkappe 31 gebildet ist. Die Ausbildung dieses Ventilkörpers 2 erfolgt in gleicher Weise gemäß vorstehender Beschreibung zu Figur 4 und 5.

## Patentansprüche

1. Ventilkörperpaarung zur Regulierung und/oder Absperrung eines oder mehrerer Fluidströme, insbesondere für Wasserarmaturen, wobei wenigstens ein Ventilkörper (1) zumindest an seiner Dichtfläche (11) aus hartem keramischem Material besteht, dadurch gekennzeichnet, daß der/die an dieser Dichtfläche (11) aus keramischem Material anliegende/n Ventilkörper (2) zumindest an seiner/ihren Dichtfläche/n (21), die an der Dichtfläche (11) aus keramischem Material anliegt/anliegen, aus Kunststoffmaterial besteht/bestehen.

2. Ventilkörperpaarung nach Anspruch 1, dadurch gekennzeichnet, daß als Kunststoffmaterial Polyäthylen oder Polypropylen eingesetzt ist.

3. Ventilkörperpaarung nach Anspruch 1 oder 2, dadurch gekennzeichnet, daß der eine Ventilkörper (2) aus massivem Kunststoffmaterial besteht.

4. Ventilkörperpaarung nach Anspruch 1 oder 2, dadurch gekennzeichnet, daß der eine Ventilkörper (2) aus einem Trägerkörper (3) und einer Kunststoffbeschichtung besteht, während der andere Ventilkörper (1) aus Keramikmaterial besteht.

5. Ventilkörperpaarung nach Anspruch 4, dadurch gekennzeichnet, daß der Trägerkörper (3) nur zum Teil mit Kunststoffmaterial beschichtet ist.

6. Ventilkörperpaarung nach Anspruch 5, dadurch gekennzeichnet, daß der Trägerkörper (3) mit einer Kunststoffkappe (31) versehen ist, die an der Dichtfläche (11) des Ventilkörpers (1) aus keramischem Material zur Anlage gelangt.

7. Ventilkörperpaarung nach Anspruch 6, dadurch gekennzeichnet, daß die Kunststoffkappe (31) adhäsiv auf dem Trägerkörper (3) befestigt ist.

8. Ventilkörperpaarung nach Anspruch 6, dadurch gekennzeichnet, daß die Kunststoffkappe (31) form- und/oder kraftschlüssig an dem Trägerkörper (3) verankert ist.

9. Ventilkörperpaarung nach einem der Ansprüche 1 bis 6, dadurch gekennzeichnet, daß die Ventilkörper (1,2) als ebene Scheiben geformt sind und daß der scheibenförmige Ventilkörper (1) aus keramischem Material so ausgebildet ist, daß die Dichtfläche (21) des scheibenförmigen Ventilkörpers (2) aus Kunststoffmaterial in jeder Ventilstellung im wesentlichen von der ebenen Dichtfläche (11) des Ventilkörpers (1) aus Keramikmaterial aufgenommen ist.

10. Ventilkörperpaarung nach Anspruch 9, dadurch gekennzeichnet, daß die scheibenförmigen Ventilkörper (1,2) in einem Mengenregulierventil angeordnet sind, welches in sanitäre Wasserarmaturen einsetzbar ist.

11. Ventilkörperpaarung nach Anspruch 10, dadurch gekennzeichnet, daß der scheibenförmige Ventilkörper (2) aus Kunststoffmaterial stromaufwärts vor dem Ventilkörper (1) aus Keramikmaterial angeordnet ist.

12. Ventilkörperpaarung nach Anspruch 10, dadurch gekennzeichnet, daß der Ventilkörper (2) mit der Kunststoffkappe (31) in dem Ventil so angeordnet ist, daß die Kunststoffkappe (31) vom strömenden Wasser gegen den Trägerkörper (3) gedrückt ist.

13. Ventilkörperpaarung nach Anspruch 9, dadurch gekennzeichnet, daß die scheibenförmigen Ventilkörper (1,2) in einem in sanitäre Wasserarmaturen einsetzbaren Misch- und Mengenregulier- und/oder Mehrwegeventil eingesetzt sind.

14. Ventilkörperpaarung nach wenigstens einem der Ansprüche 1 bis 13, dadurch gekennzeichnet, daß der Ventilkörper (2) aus Kunststoffmaterial im Spritzgußverfahren hergestellt ist.

15. Ventilkörperpaarung nach Anspruch 14, dadurch gekennzeichnet, daß bei der Herstellung des Ventilkörpers (2) die Betätigungsspindel mit eingespritzt ist.

16. Ventilkörperpaarung nach wenigstens einem der Ansprüche 4 bis 15, dadurch gekennzeichnet, daß der Trägerkörper (3) aus Metall, z.B. aus rostfreiem Stahl, vorzugsweise in Pulvermetallurgie oder aus Keramikmaterial, z.B. Aluminiumoxid, sintertechnisch hergestellt ist.

17. Ventilkörperpaarung nach wenigstens einem der Ansprüche 1 bis 16, dadurch gekennzeichnet, daß im Bereich der Schließkante der Dichtfläche (21) des Ventilkörpers (2) aus Kunststoffmaterial ein Abstreifer aus Metall angeordnet ist, mit dem Partikel von der Dichtfläche (11) des Ventilkörpers (1) aus keramischem Material beim Schließvorgang entfernt werden.

## Claims

1. Valve body combination for regulating and/or shutting off one or more flows of fluid, especially for water fittings, wherein at least one valve body (1), at least on its sealing surface (11), consists of hard ceramic material, characterised in that the valve body or bodies (2) coming to bear against this sealing surface (11) of ceramic material consist(s) of plastics material at least on its (their) sealing surface(s) (21) which come(s) to bear on the sealing surface (11) of ceramic material.

2. Valve body combination according to Claim 1, characterised in that polyethylene or polypropylene is used as plastics material.

3. Valve body combination according to Claim 1 or 2, characterised in that one valve body (2) consists of solid plastics material.

4. Valve body combination according to Claim 1 or 2, characterised in that one valve body (2) consists of a support body (3) and a coating of plastics material, while the other valve body (1) consists of ceramic material.

5. Valve body combination according to Claim 4, characterised in that the support body (3) is only partly coated with plastics material.

6. Valve body combination according to Claim 5, characterised in that the support body (3) is provided with a cap (31) of plastics material, which comes to bear against the sealing surface (11) of the valve body (1) of ceramic material.

7. Valve body combination according to Claim 6, characterised in that the cap (31) of plastics material is adhesively secured to the support body (3).

8. Valve body combination according to Claim 6, characterised in that the cap (31) of plastics material is anchored positively and/or frictionally on the support body (3).

9. Valve body combination according to one of Claims 1 to 6, characterised in that the valve bodies (1, 2) are in the form of flat discs and that the disc-shaped valve body (1) of ceramic material is so constructed that the sealing surface (21) of the disc-shaped valve body (2) of plastics material is in each valve position substantially accommodated on the flat sealing surface (11) of the valve body (1) of ceramic material.

10. Valve body combination according to Claim 9, characterised in that the disc-shaped valve bodies (1, 2) are arranged in a flow control valve which is usable in sanitary water fittings.

11. Valve body combination according to Claim 10, characterised in that the disc-shaped valve body (2) of plastics material is arranged upstream before the valve body (1) of ceramic material.

12. Valve body combination according to Claim 10, characterised in that the valve body (2) with the cap (31) of plastics material is so arranged in the valve that the cap (31) of plastics material is pressed against the support body (3) by the flowing water.

13. Valve body combination according to Claim 9, characterised in that the disc-shaped valve bodies (1,2) are installed in a mixing and flow control and/or multi-way valve that can be installed in sanitary water fittings.

14. Valve body combination according to at least one of Claims 1 to 13, characterised in that the valve body (2) of plastics material is produced by the injection-moulding method.

15. Valve body combination according to Claim 14, characterised in that when manufacturing the valve body (2) the actuating spindle is injection-moulded with it at the same time.

16. Valve body combination according to at least one of Claims 4 to 15, characterised in that the support body (3) made of metal, for example, of stainless steel, is preferably produced by sintering technology by powder metallurgy or from ceramic material, for example aluminium oxide.

17. Valve body combination according to at least one of Claims 1 to 16, characterised in that in the region of the closing edge of the sealing surface (21) of the valve body (2) of plastics material a scraper made of metal is arranged with which particles are removed from the sealing surface (11) of the valve body (1) of ceramic material during the closing operation.

## Revendications

1. Paire pour corps de soupape pour réguler et/ou couper un ou plusieurs courants de fluide, notamment pour des robinets d'eau, avec au moins un corps de soupape (1) composé sur au moins l'une de ses surfaces d'étanchéité (11) d'une matière céramique dure, caractérisée en ce que le ou les corps de soupape (2) appliqué(s) contre la ou les surface(s) d'étanchéité (11) en matière céramique sont en matière plastique au moins au niveau de leur(s) surface(s) d'étanchéité (21) venant s'appliquer contre la surface d'étanchéité (11) en matière céramique.

2. Paire pour corps de soupape selon la revendication 1, caractérisée en ce que la matière plastique est du polyéthylène ou du polypropylène.

3. Paire pour corps de soupape selon la revendication 1 ou 2, caractérisée en ce qu'un corps de soupape (2) est en matière plastique massive.

4. Paire pour corps de soupape selon la revendication 1 ou 2, caractérisée en ce qu'un corps de soupape (2) se compose d'un organe de support (3) et d'un revêtement en matière plastique alors que l'autre corps de soupape (1) est en matière céramique.

5. Paire pour corps de soupape selon la revendication 4, caractérisée en ce que le corps de support (3) est au moins revêtu en partie avec de la matière plastique.

6. Paire pour corps de soupape selon la revendication 5, caractérisée en ce que le corps de support (3) est muni d'un capuchon en matière plastique (31) qui arrive en appui contre la surface d'étanchéité (11) du corps de soupape (1) en matière céramique.

7. Paire pour corps de soupape selon la revendication 6, caractérisée en ce que le capuchon en matière plastique (31) est fixé par adhésif sur le corps de support (3).

8. Paire pour corps de soupape selon la revendication 6, caractérisée en ce que le capuchon en matière plastique (31) est accroché par une liaison par la forme et/ou par la force sur le corps de support (3).

9. Paire pour corps de soupape selon l'une des revendications 1 à 6, caractérisée en ce que les corps de soupape (1, 2) sont des disques plans et le corps de soupape (1) en forme de disque en matière céramique est réalisé pour que la surface d'étanchéité (21) du corps de soupape (2) en forme de disque en matière plastique soit reçue quelle que soit la position de la soupape, principalement par les surfaces d'étanchéité planes (11) du corps de soupape (11) en matière céramique.

10. Paire pour corps de soupape selon la revendication 9, caractérisée en ce que les corps de soupape (1, 2) en forme de disque sont logés dans un corps de robinet de régulation de débit qui se loge lui-même dans de la robinetterie d'eau sanitaire.

11. Paire pour corps de soupape selon la revendication 10, caractérisée en ce que le corps de soupape (2) en forme de disque en matière plastique se trouve en aval du corps de soupape (1) en matière céramique.

12. Paire pour corps de soupape selon la revendication 10, caractérisée en ce que le corps de soupape (2) et le capuchon en matière plastique (31) sont placés dans le robinet pour que le capuchon en matière plastique (31) se trouve poussé par l'eau qui s'écoule contre le corps de support (3).

13. Paire pour corps de soupape selon la revendication 9, caractérisée en ce que les corps de soupape (1, 2) en forme de disque se logent dans une commande de mélangeur et de régulateur de débit et/ou de robinet à plusieurs voies d'un robinet d'eau sanitaire.

14. Paire pour corps de soupape selon au moins l'une des revendications 1 à 13, caractérisée en ce que le corps de soupape (2) en matière plastique est fabriqué par un procédé d'injection.

15. Paire pour corps de soupape selon la revendication 14, caractérisée en ce qu'à la fabrication du corps de soupape (2) on injecte la broche de manoeuvre.

16. Paire pour corps de soupape selon au moins l'une des revendications 4 à 15, caractérisée en ce que le corps de support (3) est en métal, par exemple en acier inoxydable, de préférence fabriqué en métallurgie des poudres ou en matière céramique, par exemple un oxyde d'aluminium, par frittage.

17. Paire pour corps de soupape selon au moins l'une des revendications 1 à 16, caractérisée en ce qu'au niveau de l'arête de fermeture de la surface d'étanchéité (21) du corps de soupape (2) en matière plastique il est prévu un racleur en métal qui évacue de la surface d'étanchéité (11) du corps de soupape (1) en matière céramique, les particules au moment de la fermeture.
